# EUROPÄISCHE PATENTSCHRIFT

(11) **EP 2 407 331 B1**
(45) Veröffentlichungstag und Bekanntmachung des Hinweises auf die Patenterteilung: **24.10.2012**
(21) Anmeldenummer: 10007206.5
(22) Anmeldetag: 13.07.2010
(51) Int. Cl.: B60H 1/34

(54) **Luftausströmer als Ausstattungsteil für Kraftfahrzeuge**
Air outlet as fitting piece for motor vehicles
Dispositif d'évacuation de l'air comme élément d'équipement pour véhicules automobiles

(43) Veröffentlichungstag der Anmeldung: 18.01.2012
(73) Patentinhaber: Innovative Components Technologies GmbH, 57368 Lennestadt (DE)
(72) Erfinder: Richard, Joachim, 57368 Lennestadt-Saalhausen (DE)
(74) Vertreter: Köchling, Conrad-Joachim

(56) Entgegenhaltungen:
- EP-A2- 0 622 257
- EP-A2- 0 865 946
- DE-B3-102008 002 958
- US-A- 6 059 652

## Beschreibung

Die Erfindung betrifft einen Luftausströmer als Ausstattungsteil für Kraftfahrzeuge gemäß Oberbegriff des Patentanspruches 1 oder des Patentanspruchs 3.

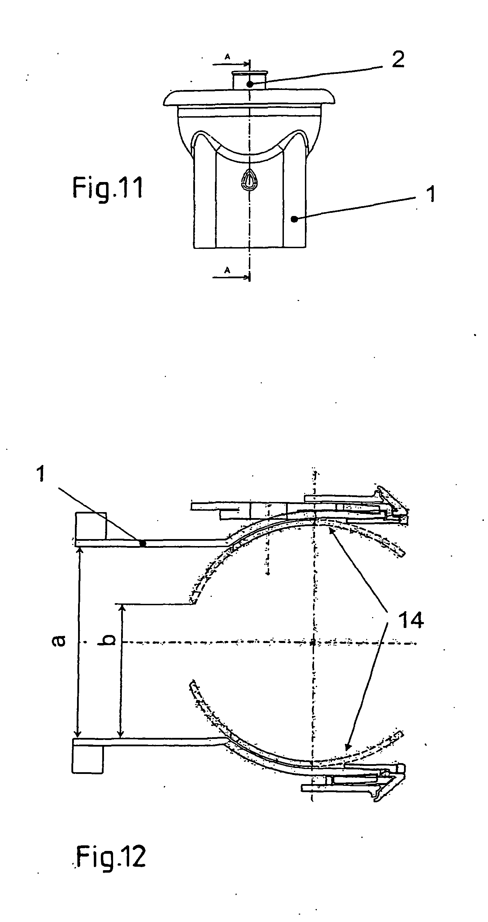

Der Stand der Technik ist anhand der anliegenden Figuren 11 und 12 erläutert. In Figur 11 ist ein entsprechender, vorbekannter Luftausströmer gezeigt.

Dieser weist ein Gehäuse 1 auf. Dieses Gehäuse ist in der Zeichnungsfigur 11 unten an einen Luftströmungskanal mit einem Anschlussstutzen anschließbar. Die Luft kann das hohle Gehäuse 1 von unten nach oben durchströmen. Oben ist die Auslassöffnung für Luft, beispielsweise zum Innenraum des Kraftfahrzeuges gezeigt. Das Gehäuse 1 ist zur Auslassöffnung hin halbkugelartig erweitert. In dieser Erweiterung ist ein mit seiner Außenkontur der halbkugeligen Form angepasstes Strömungsleitteil 14 vorgesehen, in dem Luftführungselemente, beispielsweise Lamellen, angeordnet sind, die vorzugsweise verstellbar sind, um die Luftströmung beeinflussen zu können. Zudem ist zur Luftführung das mit seiner Außenkontur der Innenkontur der halbkugelförmigen Erweiterung angepasste Strömungsleitteil schwenkbeweglich in der halbkugelförmigen Erweiterung des Gehäuses 1 angeordnet. Dies ist in Figur 12 verdeutlicht. Das Strömungsleitteil 14 ist dort in durchgezogenen Linien in der Mittellage gezeigt. In gestrichelten Linien ist die alternative Schwenklage mit der Auslenkung nach oben oder der Auslenkung nach unten gezeigt. Sofern dieses Strömungsleitteil 14 vom Benutzer verschwenkt wird, indem er an dem Betätigungsknopf 2 anfasst und eine entsprechende Schwenkbewegung des Strömungsleitteils 14 bewirkt, tritt der hintere Schalenbereich des schalenartigen Strömungsleitteiles sehr weit in den Luftstromführungsbereich des Ausströmergehäuses 1 ein und reduziert somit die Luftmenge, die durch das Strömungsleitteil 14 den Benutzer erreicht. In der Zeichnungsfigur 12 ist mit a der maximale Querschnitt des Anschlussstutzens des Gehäuses 1 gezeigt. Mit b ist der Bereich verdeutlicht, der für die Luftströmung zur Verfügung steht, wenn das Strömungsleitteil eine maximale Schwenklage einnimmt. Es ist klar ersichtlich, dass hier eine erhebliche Einschränkung der durchströmenden Luftmenge erfolgt. Dies kann nur dadurch ausgeglichen werden, dass der elektrische Lüfter, der die Luft durch den Luftausströmer transportiert, mit höherer Leistung betrieben wird. Dies hat nachteilige Wirkungen auf den Energieverbrauch des Lüfters, wobei zudem auch die Strömungsgeschwindigkeit der durch den Luftausströmer transportierten Luft erhöht wird, was vom Benutzer teilweise als nachteilig angesehen wird.

Ein Luftausströmer gattungsgemäßer Art ist aus der EP 0 865 946 A 2 bekannt.

Hierbei wird trotz eines entsprechend großen möglichen Schwenkwinkels des Strömungsleitteiles auch bei dessen maximaler Winkelausrichtung der durch den Luftausströmer durchströmende Luftstrom nicht oder nur unwesentlich behindert, so dass eine entsprechende Luftströmung ohne Erhöhung der Lüfterleistung erreicht werden kann.

Das Strömungsleitteil ist durch zwei teleskopähnlich ineinander greifende Ringteile mit entsprechend der Halbkugelform der Erweiterung ballig geformten Außenfläche beziehungsweise auch Innenflächen gebildet. Ein erstes Ringteil ist dabei in einem dem Anschlussstutzen zugewandten Bereich der Erweiterung angeordnet und begrenzt um eine quer zur Hauptmittellängsachse des Gehäuses gerichtete Achse schwenkbar. Ein zweites Ringteil ist in einem der Mündung der Erweiterung zugewandten Bereich angeordnet. Dieses zweite Ringteil ist in oder auf dem ersten Ringteil geführt und ebenfalls um eine gedachte Achse, die quer zur Hauptmittellängsachse des Gehäuses gerichtet ist, schwenkbar. Bei der Benutzung kann der Benutzer beispielsweise an einem Betätigungsknopf die Ausrichtung des Strömungsleitteiles vornehmen, wobei bei einer maximalen Winkelausrichtung relativ zum Gehäuse die hintere Schale trotz der Auslenkung nicht oder nur wenig in den Durchlass des Gehäuses hineinragt, während die vordere Schale noch weiter verschwenkt werden kann, um die entsprechende Strömungsausrichtung zu erreichen.

Um sicherzustellen, dass die Schwenkbewegung der hinteren Schale, also des ersten Ringteiles auf ein Sollmaß beschränkt wird, kann dabei vorgesehen sein, dass der Schwenkwinkel der hinteren Schale, also des ersten Ringteiles, durch einen gehäuseseitigen Anschlag begrenzt ist.

Um auch den Schwenkweg der vorderen Schale, also des zweiten Ringteiles zu begrenzen, ist erfindungsgemäß vorgesehen, dass das erste Ringteil mit einem Abstandsspalt in der halbkugelartigen Erweiterung angeordnet ist und das zweite Ringteil außen auf dem ersten Ringteil gegenüber diesem schwenkbar gehalten ist, welches den Abstandsspalt mit Bewegungsspiel überbrückt, und dass am dem Anschlussstutzen zugewandten Endbereich des ersten Ringteils ein von diesem radial abragender Anschlag oder Anschlagkragen ausgebildet ist, an den das zweite Ringteil in maximaler Schwenklage relativ zum ersten Ringteil angelegt ist.

Auf diese Weise ist sichergestellt, dass das zweite Ringteil relativ zum ersten Ringteil nur bis zu einem gewünschten Schwenkwinkel schwenkbar beziehungsweise bewegbar ist, wobei gleichzeitig sichergestellt ist, dass das erste Ringteil hinsichtlich seines Schwenkwinkels begrenzt ist.

Gemäß dieser Ausgestaltung ist der freie Strömungsdurchgang durch den Anschlussstutzen des Gehäuses sichergestellt, wobei auch eine erhebliche Verbesserung gegenüber dem Stand der Technik dann erreicht wird, wenn das erste Ringteil in der maximalen Schwenklage mit einem Rand geringfügig in den Strömungskanal des Gehäuses hineinragt, so dass dieser nicht vollständig, aber doch im Wesentlichen zur Luftdurchströmung frei zur Verfügung steht.

Insbesondere ist hierbei vorgesehen, dass das erste Ringteil eine Schwenkwinkelbegrenzung aufweist oder mit dem es umgebenden Gehäuse bildet, so dass das erste Ringteil in maximaler Schwenklage relativ zur Erweiterung nicht oder nur geringfügig mit einem Teil seines dem Anschlussstutzen zugewandten Endbereichs in den durch das Gehäuse gebildeten Luftströmungskanal hineinragt.

Eine alternative Lösung für die Schwenkwegbegrenzung wird darin gesehen, dass das erste Ringteil der Wandung der Erweiterung unmittelbar benachbart angeordnet ist und mit zwei diametral gegenüberliegenden Zapfen an der Wandung um eine erste Schwenkachse schwenkbar gehalten ist, wobei vorzugsweise an den Zapfen von diesen jeweils ein radial abragender Vorsprung vorgesehen ist, der mit einem Ausschnitt in der Wandung als Schwenkwinkelbegrenzung zusammenwirkt, und dass das zweite Ringteil in das erste Ringteil passend eingesetzt ist und an diametral gegenüberliegenden, nach radial innen vorragenden Zapfen um eine zweite Schwenkachse begrenzt schwenkbar gelagert ist, die an in Richtung auf die Mündung der Erweiterung vorragenden Armen des ersten Ringteils ausgebildet sind und in Lagerlochungen im Mantel des zweiten Ringteils greifen, wobei die erste und die zweite Schwenkachse einander kreuzen.

Durch diese Ausbildung wird eine Kreuzgelenkausbildung zwischen den Funktionsteilen erreicht, nach Art eines Kardangelenkes, wobei einerseits das erste Ringteil um die erste Schwenkachse begrenzt schwenkbar ist und andererseits das zweite Ringteil wiederum um die zweite Schwenkachse begrenzt schwenkbar ist, so dass eine vielfältige Einstellungsmöglichkeit erreicht wird, ohne den freien Strömungsquerschnitt durch das Gehäuse wesentlich einzuengen.

Die Ausbildung, wonach die erste und die zweite Schwenkachse einander kreuzen, ist nicht eng auszulegen, diese Schwenkachsen könnten auch mit räumlichem Abstand voneinander, also übereinander angeordnet sein, wobei allerdings deren Richtung um 90 ° zueinander versetzt ist.

Um in besonders einfacher Weise eine Schwenkwegbegrenzung zu realisieren, ist vorgesehen, dass die Arme des ersten Ringteils sich von den endseitigen Zapfen zum Körper des ersten Ringteils verbreitern und eine Anschlagkante bilden, und dass neben den Lagerlochungen in der Außenwandung des zweiten Ringteils eine Vertiefung ausgebildet ist, an deren Randkanten eine Anschlagkante des ersten Ringteils in der maximal möglichen Schwenklage anliegt.

Ausführungsbeispiele der Erfindung sind in der Zeichnung dargestellt und im Folgenden näher beschrieben. Es zeigt:
- Figur 1: ein erfindungswesentliches Elementeines Luftausströmers analog A-A der Figur 11 gesehen in maximaler Auslenkung nach oben;
- Figur 2: desgleichen bei maximaler Auslenkung nach unten;
- Figur 3: einen Luftausströmer in Seitenansicht;
- Figur 4: desgleichen in Draufsicht gesehen;
- Figur 5: einen erfindungsgemäßen Luftausströmer in Explosionsdarstellung;
- Figur 6: einen Luftausströmer in Draufsicht mit Angabe der möglichen Drehachsen X beziehungsweise Y;
- Figur 7: den Luftausströmer in Blickrichtung des Pfeiles X der Figur 6 gesehen;
- Figur 8: den Luftausströmer im Schnitt A-A der Figur 6 gesehen;
- Figur 9: den Luftausströmer in Richtung des Pfeiles Y der Figur 6 gesehen;
- Figur 10: den Luftausströmer im Schnitt B-B der Figur 6 gesehen.

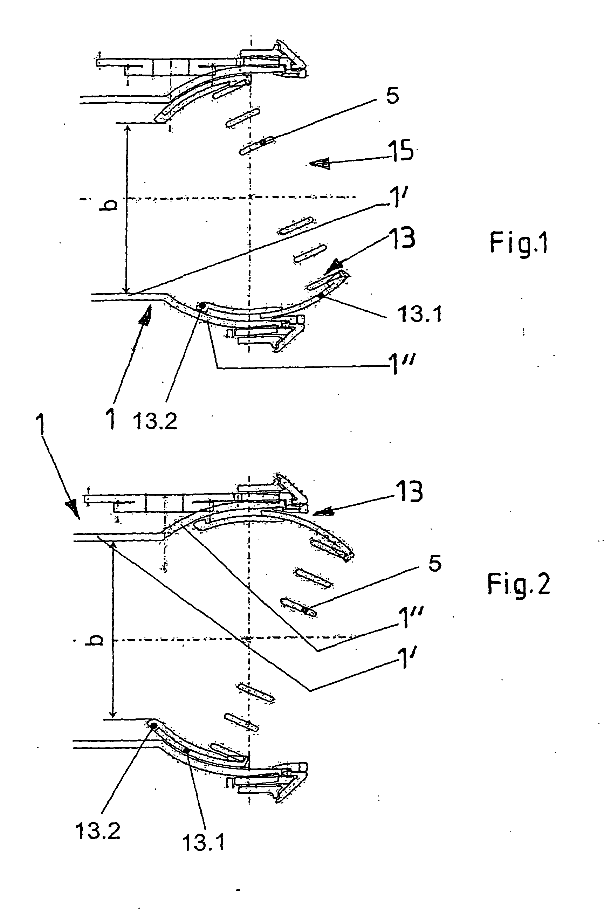

In Figur 1 und 2 sind wesentliche Bestandteile eines Luftausströmers als Ausstattungsteil für Kraftfahrzeuge gezeigt. Solche Luftausströmer weisen ein an einem Luftströmungskanal anschließbares hohles Gehäuse 1 auf. Das Gehäuse weist einen Anschlussstutzen 1' für den Luftzufuhrkanal auf sowie eine Auslassöffnung 15 für die durchströmende Luft. Wie aus den Figuren ersichtlich, ist das Gehäuse 1 zur Auslassöffnung 15 hin halbkugelartig erweitert. In dieser Erweiterung 1'' ist ein mit seiner Außenkontur der halbkugeligen Form angepasstes Strömungsleitteil 13 vorgesehen, in welchem Führungselemente, zum Beispiel Lamellen 5 gehalten sind. Die Lamellen 5 können verstellbar sein, um die Luftströmung zu beeinflussen.

Das Strömungsleitteil 13 ist in der Auslassöffnung 15 beziehungsweise der Erweiterung 1'' schwenkbar angeordnet.

Erfindungsgemäß besteht das Strömungsleitteil 13 aus zwei teleskopähnlich ineinander greifenden Ringteilen 13.1, 13.2 mit entsprechend der Halbkugelform der Erweiterung 1'' ballig geformten Außenflächen. Ein erstes Ringteil 13.2 ist in einem dem Anschlussstutzen 1' zugewandten Bereich der Erweiterung 1'' angeordnet und begrenzt um eine quer zur Hauptmittellängsachse des Gehäuses 1 gerichtete Achse schwenkbar. Ein zweites Ringteil 13.1 ist in einem der Mündung der Erweiterung 1'' zugewandten Bereich angeordnet. Letzteres ist in oder auf dem ersten Ringteil 13.2 geführt und um eine gedachte Achse, die quer zur Hauptmittellängsachse des Gehäuses 1 gerichtet ist, schwenkbar.

Bei der Ausführungsform nach Figur 1 und 2 ist das erste Ringteil 13.2 mit einem Abstandsspalt in der halbkugelartigen Erweiterung 1'' angeordnet. Das zweite Ringteil 13.1 ist außen auf dem ersten Ringteil 13.2 gegenüber diesem schwenkbar angeordnet, wobei das zweite Ringteil 13.1 den Abstandsspalt zwischen dem Teil 13.2 und der Erweiterung 1'' mit Bewegungsspiel überbrückt. Am den Anschlussstutzen 1' zugewandten Endbereich des ersten Ringteiles 13.2 ist ein von diesem radial abragender Anschlag oder Anschlagkragen ausgebildet, an den das zweite Ringteil 13.1 in maximaler Schwenklage relativ zum ersten Ringteil 13.2 angelegt ist. Diese Anlageposition ist in Figur 1 oben und in Figur 2 unten gezeigt. Zusätzlich weist auch das zweite Ringteil 13.1 an seinem aus der Mündung der Erweiterung 1'' herausragenden Ende einen Anschlag oder Anschlagkragen auf, welcher in der maximalen Schwenklage an die vordere Stirnkante des ersten Ringteiles 13.2 angelegt ist, wie ebenfalls in Figur 1 oben und in Figur 2 unten gezeigt. Infolge der zweischaligen, teleskopartigen Ausbildung der kugelschalenförmigen Ringteile 13.1 und 13.2 wird auch bei extremer Schwenklage der Querschnitt b des Gehäuses 1 nicht oder nur geringfügig durch einen Teil des ersten Ringteiles 13.2 überragt, so dass die Luftströmung im Wesentlichen unbehindert den Luftausströmer passieren kann.

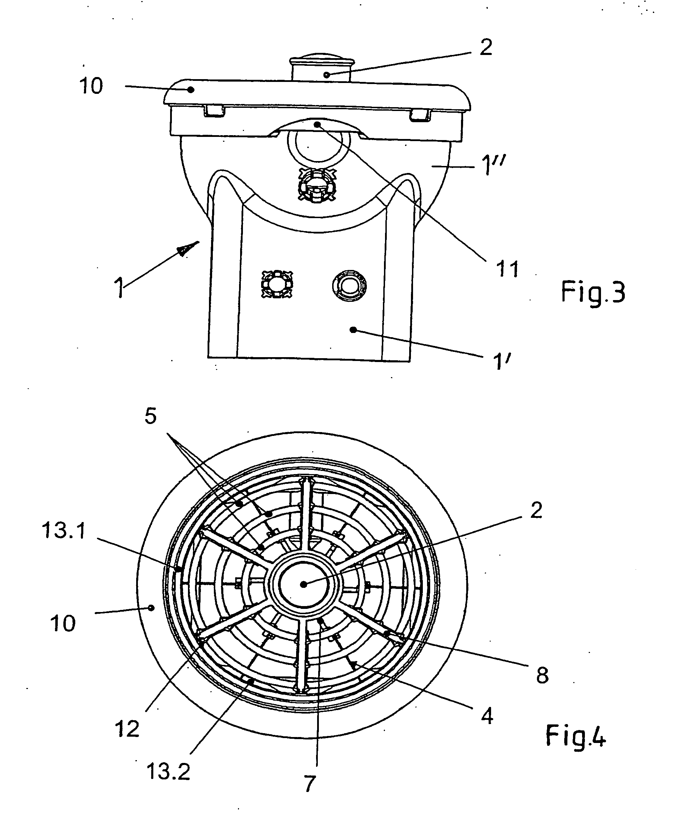

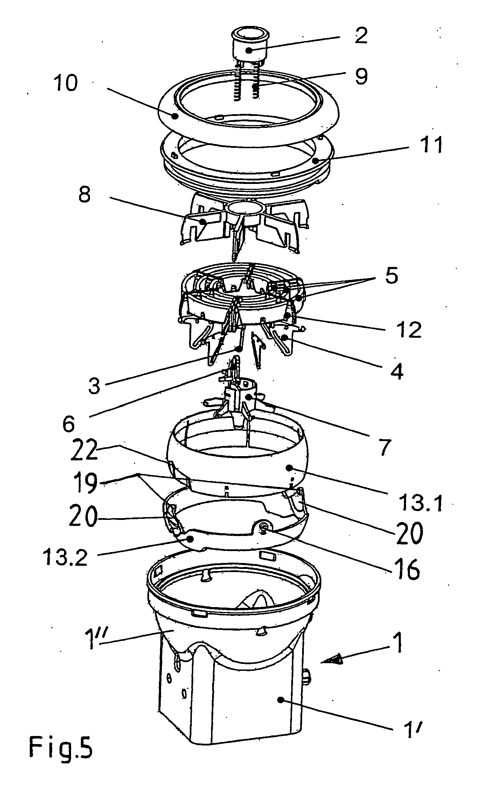

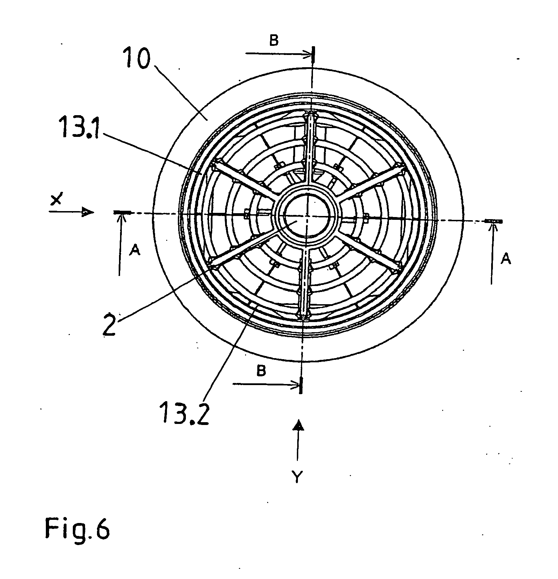

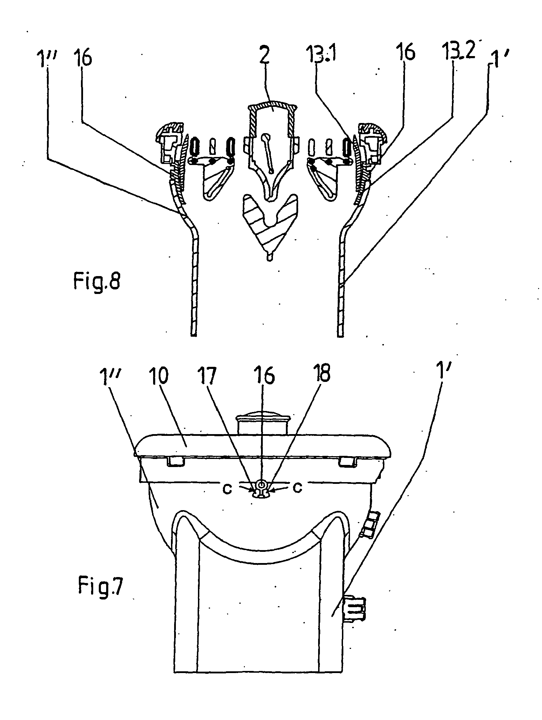

In den Figuren 3 bis 10 ist eine zweite Ausführungsform eines Luftausströmers gezeigt. Der Aufbau wird insbesondere durch die Explosionsdarstellung gemäß Figur 5 deutlich. Bei dieser Ausgestaltung ist das erste Ringteil 13.2 mit seiner Außenschale der Erweiterung 1" des Gehäuses 1 unmittelbar benachbart angeordnet, wobei lediglich ein Bewegungsspiel zwischen diesen Teilen besteht. Es ist mit zwei diametral gegenüberliegenden Zapfen 16 an der Wandung um eine erste Schwenkachse schwenkbar gehalten. Die Schwenkachse verläuft quasi parallel zu der Schnittlinie A-A der Figur 6. Vorzugsweise ist an den Zapfen 16 von diesen jeweils ein radial abragender Vorsprung 17 vorgesehen, der mit einem Ausschnitt 18 in der Wandung des Gehäuses 1, beziehungsweise des Gehäuseteils 1'', als Schwenkwinkelbegrenzung zusammenwirkt. In der Figur 7 ist beispielsweise die Mittellage gezeigt.

Das zweite Ringteil 13.1 ist passend in das erste Ringteil 13.2 eingesetzt, so dass die schalenförmig gewölbten Wandungen aneinander liegen, gegebenenfalls mit Bewegungsspiel. Dieses zweite Ringteil 13.1 ist an diametral gegenüberliegenden, nach radial innen vorragenden Zapfen 19 um eine zweite Schwenkachse begrenzt schwenkbar gelagert. Die zweite Schwenkachse liegt parallel zu der Schnittlinie B-B der Figur 6. Die Zapfen 19 sind an in Richtung auf die Mündung der Erweiterung 1'' vorragenden Armen 20 des ersten Ringteiles 13.2 ausgebildet. In Montagesolllage greifen die Zapfen 19 in Lagerlochungen 22, im Mantel des zweiten Ringteiles 13.1. Eine dieser Lagerlochungen ist in Figur 5 gezeigt. Die zweite liegt diametral gegenüber und ist in Figur 5 nicht sichtbar.

Die durch die entsprechenden Zapfen gebildeten beiden Schwenkachsen kreuzen einander beziehungsweise sind um 90 ° zueinander versetzt ausgerichtet.

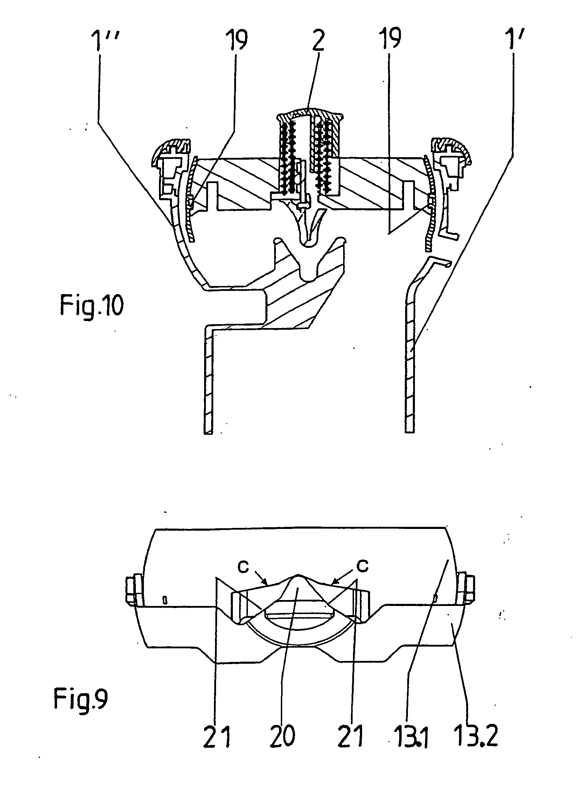

Wie insbesondere in Figur 9 anschaulich dargestellt, verbreitern sich die Arme 20 des ersten Ringteiles 13.2 von den endseitigen Zapfen 19 zum Körper des ersten Ringteiles 13.2 hin und bilden eine Anschlagkante 21. Diese Anschlagkante 21 wirkt mit einer weiteren Anschlagkante "C" zusammen, die dadurch gebildet ist, dass neben den Lagerlochungen 22 in der Außenwandung des zweiten Ringteiles 13.1 eine Vertiefung ausgebildet ist, an deren Randkanten "C" alternativ eine Anschlagkante 21 des ersten Ringteiles 13.2 in der maximal möglichen Schwenklage anliegt.

Insbesondere in der Explosionszeichnung gemäß Figur 5 ist noch dargestellt, dass der Betätigungsknopf 2,7 gegen eine Feder 9 relativ zu einem unbeweglich am Gehäuse 1 positionierten Halteelement 8 beweglich ist, wobei die Bewegung durch eine Herzkurve 6 und einen mit dieser zusammenwirkenden Hebel 3 arretierbar und lösbar ist. Das Lamellenpaket 5 ist durch den Betätigungsknopf 2 betätigbar, indem der Mitnehmer 4 betätigt wird, wodurch eine entsprechende Verstellung der Lamellen 5 erreicht wird. Mit 8 ist ein nabenförmiges Halteelement mit radial abragenden Haltefingern im Inneren des Luftausströmers bezeichnet. Die Vorderkante des Gehäuses 1 ist durch einen Ring 11 abgedeckt, der wiederum durch einen Dekorring 10 überdeckt ist. Mit 12 ist eine Lagerleiste des die Lamellen 5 haltenden Teils bezeichnet. Der Betätigungsknopf 2,7 besteht aus zwei miteinander verbindbaren Teilen.

## Patentansprüche

1. Luftausströmer als Ausstattungsteil für Kraftfahrzeuge, mit einem an einen Luftströmungskanal anschließbaren hohlen Gehäuse (1) mit einem Anschlussstutzen (1') für den Luftzufuhrkanal und einer Auslassöffnung (15) für Luft zum Innenraum des Kraftfahrzeuges, wobei das Gehäuse (1) zur Auslassöffnung (15) hin halbkugelartig erweitert ist und in dieser Erweiterung (1'') ein mit seiner Außenkontur der halbkugeligen Form angepasstes Strömungsleitteil (13) aufweist, in dem Luftführungselemente gehalten sind, wobei das Strömungsleitteil (13) in der Erweiterung (1'') schwenkbar angeordnet ist, wobei das Strömungsleitteil (13) aus zwei teleskopähnlich ineinander greifenden Ringteilen (13.1, 13.2) mit entsprechend der Halbkugelform der Erweiterung ballig geformten Außenflächen besteht, wobei ein erstes Ringteil (13.2) in einem dem Anschlussstutzen (1') zugewandten Bereich der Erweiterung (1'') angeordnet ist und begrenzt um eine quer zur Hauptmittelachse des Gehäuses (1) gerichtete gedachte Achse schwenkbar ist und ein zweites Ringteil (13.1) in einem der Mündung der Erweiterung (1'') zugewandten Bereich angeordnet ist sowie in oder auf dem ersten Ringteil (13.2) geführt ist und um eine gedachte Achse, die quer zur Hauptmittelachse des Gehäuses (1) gerichtet ist, schwenkbar ist, **dadurch gekennzeichnet, dass** das erste Ringteil (13,2) mit einem Abstandsspalt in der halbkugelartigen Erweiterung (1") angeordnet ist und das zweite Ringteil (13.1) außen auf dem ersten Ringteil (13.2) gegenüber diesem schwenkbar gehalten ist, welches den Abstandsspalt mit Bewegungsspiel überbrückt, und dass am dem Anschlussstutzen (1') zugewandten Endbereich des ersten Ringteils (13.2) ein von diesem radial abragender Anschlag oder Anschlagkragen ausgebildet ist, an den das zweite Ringteil (13.1) in maximaler Schwenklage relativ zum ersten Ringteil (13.2) angelegt ist.

2. Luftausströmer nach Anspruch 1, **dadurch gekennzeichnet, dass** das erste Ringteil (13.2) eine Schwenkwinkelbegrenzung aufweist oder mit dem es umgebenden Gehäuse (1) bildet, so dass das erste Ringteil (13.2) in maximaler Schwenklage relativ zur Erweiterung (1'') nicht oder nur geringfügig mit einem Teil seines dem Anschlussstutzen (1') zugewandten Endbereichs in den durch das Gehäuse (1) gebildeten Luftströmungskanal (b) hineinragt.

3. Luftausströmer als Ausstattungsteil für Kraftfahrzeuge, mit einem an einen Luftströmungskanal anschließbaren hohlen Gehäuse (1) mit einem Anschlussstutzen (1') für den Luftzufuhrkanal und einer Auslassöffnung (15) für Luft zum Innenraum des Kraftfahrzeuges, wobei das Gehäuse (1) zur Auslassöffnung (15) hin halbkugelartig erweitert ist und in dieser Erweiterung (1" ) ein mit seiner Außenkontur der halbkugeligen Form angepasstes Strömungsleitteil (13) aufweist, in dem Luftführungselemente gehalten sind, wobei das Strömungsleitteil (13) in der Erweiterung (1" ) schwenkbar angeordnet ist, wobei das Strömungsleitteil (13) aus zwei teleskopähnlich ineinander greifenden Ringteilen (13.1, 13.2) mit entsprechend der Halbkugelform der Erweiterung ballig geformten Außenflächen besteht, wobei ein erstes Ringteil (13.2) in einem dem Anschlussstutzen (1') zugewandten Bereich der Erweiterung (1") angeordnet ist und begrenzt um eine quer zur Hauptmittelachse des Gehäuses (1) gerichtete gedachte Achse schwenkbar ist und ein zweites Ringteil (13.1) in einem der Mündung der Erweiterung (1") zugewandten Bereich angeordnet ist sowie in oder auf dem ersten Ringteil (13.2) geführt ist und um eine gedachte Achse, die quer zur Hauptmittelachse des Gehäuses (1) gerichtet ist, schwenkbar ist, **dadurch gekennzeichnet, dass** das erste Ringteil (13.2) der Wandung der Erweiterung (1") unmittelbar benachbart angeordnet ist und mit zwei diametral gegenüberliegenden Zapfen (16) an der Wandung um eine erste Schwenkachse schwenkbar gehalten ist, wobei vorzugsweise an den Zapfen (16) von diesen jeweils ein radial abragender Vorsprung (17) vorgesehen ist, der mit einem Ausschnitt (18) in der Wandung als Schwenkwinkelbegrenzung zusammenwirkt, und dass das zweite Ringteil (13.1) in das erste Ringteil (13.2) passend eingesetzt ist und an diametral gegenüberliegenden, nach radial innen vorragenden Zapfen (19) um eine zweite Schwenkachse begrenzt schwenkbar gelagert ist, die an in Richtung auf die Mündung der Erweiterung (1'') vorragenden Armen (20) des ersten Ringteils (13.2) ausgebildet sind und in Lagerlochungen (22) im Mantel des zweiten Ringteils (13.1) greifen, wobei die erste und die zweite Schwenkachse einander kreuzen.

4. Luftausströmer nach Anspruch 3, **dadurch gekennzeichnet, dass** die Arme (20) des ersten Ringteils (13.2) sich von den endseitigen Zapfen (19) zum Körper des ersten Ringteils (13.2) verbreitern und eine Anschlagkante (21) bilden, und dass neben den Lagerlochungen (22) in der Außenwandung des zweiten Ringteils (13.1) eine Vertiefung ausgebildet ist, an deren Randkanten (C) eine Anschlagkante (21) des ersten Ringteils (13.2) in der maximal möglichen Schwenklage anliegt.

## Claims

1. An air outlet as a fitting piece for motor vehicles, comprising a hollow housing (1) that can be connected to an airflow channel and has a connecting piece (1') for the airflow channel and an outlet opening (15) for air to the interior of the motor vehicle, the housing (1) being expanded semispherically in shape toward the outlet opening (15) and comprising in this expansion (1") a flow guide portion (13) adapted with its exterior contour to the semispherical shape, in said flow guide portion (13) air guide elements being held, the flow guide portion (13) being pivotably arranged in the expansion (1"), the flow guide portion (13) consisting of two annular pieces (13.1, 13.2) extending within one another in the manner of a telescope and having crowned external surfaces according to the semispherical shape of the expansion, a first annular piece (13.2) being arranged in a part of the expansion (1") facing the connecting piece (1') and being pivotable to a limited degree about a virtual axis arranged transversely to the main central axis of the housing (1), and a second annular piece (13.1) being arranged in a part facing the orifice of the expansion (1'') and being guided in or on the first annular piece (13.2) and being pivotable about a virtual axis arranged transversely to the main central axis of the housing (1), **characterized in that** the first annular piece (13,2) is arranged with a clearance gap in the semispherical expansion (1"), and the second annular piece (13.1) is pivotably held at the outside on the first annular piece (13.2), which spans the clearance gap with movement clearance, and that at the end zone of the first annular piece (13.2) facing the connecting piece (1'), an abutment or abutment collar radially projecting therefrom is formed, against which the second annular piece (13.1) rests in maximum pivot position relative to the first annular piece (13.2).

2. The air outlet according to claim 1, **characterized by** that the first annular piece (13.2) has a limitation for the pivot angle or forms one together with the surrounding housing (1), so that in the maximum pivot position relative to the expansion (1"), the first annular piece (13.2) does not project or projects only slightly with a part of its end zone facing the connecting piece (1') into the airflow channel (b) formed by the housing (1).

3. An air outlet as a fitting piece for motor vehicles, comprising a hollow housing (1) that can be connected to an airflow channel and has a connecting piece (1') for the airflow channel and an outlet opening (15) for air to the interior of the motor vehicle, the housing (1) being expanded semispherically in shape toward the outlet opening (15) and comprising in this expansion (1") a flow guide portion (13) adapted with its exterior contour to the semispherical shape, in said flow guide portion (13) air guide elements being held, the flow guide portion (13) being pivotably arranged in the expansion (1"), the flow guide portion (13) consisting of two annular pieces (13.1, 13.2) extending within one another in the manner of a telescope with crowned external surfaces according to the semispherical shape of the expansion, a first annular piece (13.2) being arranged in a part of the expansion (1") facing the connecting piece (1') and being pivotable to a limited degree about a virtual axis arranged transversely to the main central axis of the housing (1), and a second annular piece (13.1) being arranged in a part facing the orifice of the expansion (1") and being guided in or on the first annular piece (13.2) and being pivotable about a virtual axis arranged transversely to the main central axis of the housing (1), **characterized by** that the first annular piece (13.2) is arranged immediately adjacent to the wall of the expansion (1") and is pivotably held by two diametrically opposite spigots (16) at the wall about a first pivot axis, preferably a projection (17) being provided at the spigots (16) and radially projecting therefrom, the projection (17) cooperating with a cutout (18) in the wall as a limitation for the pivot angle, and that the second annular piece (13.1) is fittingly inserted in the first annular piece (13.2) and is pivoted to a limited degree at diametrically opposite, radially inwardly projecting spigots (19) about a second pivot axis that are formed at arms (20) of the first annular piece (13.2) projecting in the direction of the orifice of the expansion (1") and engaging in bearing holes (22) in the envelope of the second annular piece (13.1), the first and the second pivot axes crossing one another.

4. The air outlet according to claim 3, **characterized by** that the arms (20) of the first annular piece (13.2) get wider from the end-side spigot (19) to the body of the first annular piece (13.2) and form an abutment edge (21), and that beside the bearing holes (22) in the outer wall of the second annular piece (13.1) a depression is formed, at the border edges (C) thereof an abutment edge (21) of the first annular piece (13.2) resting in the maximum possible pivot position.

## Revendications

1. Dispositif d'évacuation comme élément d'équipement pour véhicules automobiles, comprenant un boîtier creux (1) qui peut être raccordé à un passage de circulation d'air et une pièce de raccordement (1') pour le passage de circulation d'air et une ouverture de sortie (15) pour l'air à l'intérieur du véhicule automobile, le boîtier (1) s'élargissant de manière hémisphérique en forme vers l'ouverture de sortie (15) et comprenant dans cet élargissement (1") une partie de guidage d'écoulement (13) adaptée avec son contour extérieur à la forme hémisphérique, dans cette partie de guidage d'écoulement (13), des éléments de guidage d'air étant maintenus, la partie de guidage d'écoulement (13) étant montée de manière pivotante dans l'élargissement (1"), la partie de guidage d'écoulement (13) consistant en deux pièces annulaires (13.1, 13.2) s'enfilant l'une dans l'autre de manière téléscopique et ayant des surfaces extérieures bombées selon la forme hémisphérique de l'élargissement, une première pièce annulaire (13.2) étant arrangée dans une partie de l'élargissement (1") tournée vers la pièce de raccordement (1') et étant pivotante à un degré limité autour d'un axe imaginaire arrangé transversalement à l'axe central principal du boîtier (1), et une deuxième pièce annulaire (13.1) étant arrangée dans une partie tournée vers l'orifice de l'élargissement (1") et étant guidée dans ou sur la première pièce annulaire (13.2) et étant pivotante autour d'un axe imaginaire arrangé transversalement à l'axe central principal du boîtier (1), **caractérisé en ce que** la première pièce annulaire (13.2) est arrangé avec un espace de jeu dans l'élargissement hémisphérique (1") et la deuxième pièce annulaire (13.1) est montée de manière pivotante à l'extérieur sur la première pièce annulaire (13.2), qui relie l'espace de jeu avec jeu de mobilité, et qu'à la zone d'extrémité de la première pièce annulaire (13.2) tournée vers la pièce de raccordement (1'), une butée ou un collier de butée est formé radialement en saillie de celle-ci, contre qui la deuxième pièce annulaire (13.1) est en appui dans l'angle de pivotement maximal par rapport à la première pièce annulaire (13.2).

2. Dispositif d'évacuation selon la revendication 1, **caractérisé en ce que** la première pièce annulaire (13.2) a une limitation pour l'angle de pivotement ou forme une limitation ensemble avec le boîtier (1) entourant, de manière que dans l'angle de pivotement maximal par rapport à l'élargissement (1"), la première pièce annulaire (13.2) ne soit pas saillant ou soit saillant seulement légèrement avec une partie de sa zone d'extrémité tournée vers la pièce de raccordement (1') dans le passage de circulation d'air (b) formé par le boîtier (1).

3. Dispositif d'évacuation comme élément d'équipement pour véhicules automobiles, comprenant un boîtier creux (1), qui peut être lié à un passage de circulation d'air et a une pièce de raccordement (1') pour le passage de circulation d'air et une ouverture de sortie (15) pour air à l'intérieur du véhicule automobile, le boîtier (1) s'élargissant de manière hémisphérique en forme vers l'ouverture de sortie (15) et comprenant dans cet élargissement (1") une partie de guidage d'écoulement (13) adaptée avec son contour extérieur à la forme hémisphérique, dans cette partie de guidage d'écoulement (13) des éléments de guidage d'air étant maintenus, la partie de guidage d'écoulement (13) étant montée de manière pivotante dans l'élargissement (1"), la partie de guidage d'écoulement (13) consistant en deux pièces annulaires (13.1, 13.2) s'enfilant l'une dans l'autre de manière téléscopique et ayant des surfaces extérieures bombées selon la forme hémisphérique de l'élargissement, une première pièce annulaire (13.2) étant arrangée dans une partie de l'élargissement (1") tournée vers la pièce de raccordement (1') et étant pivotante à un degré limité autour d'un axe imaginaire arrangé transversalement à l'axe central principal du boîtier (1), et une deuxième pièce annulaire (13.1) étant arrangée dans une partie tournée vers l'orifice de l'élargissement (1 " ) et étant guidée dans ou sur la première pièce annulaire (13.2) et étant pivotante autour d'un axe imaginaire arrangé transversalement à l'axe central principal du boîtier (1), **caractérisé en ce que** la première pièce annulaire (13.2) est arrangée immédiatement voisine à la paroi de l'élargissement (1") et est maintenue par deux doigts (16) diamétralement opposés à la paroi et est montée de manière pivotante autour d'une première axe de pivotement, de préférence une saillie (17) étant prévue au doigts (16) et faisant saillie à partir de ceux-ci et coopérant avec une découpe (18) dans la paroi comme limitation pour l'angle de pivotement, et que la deuxième pièce annulaire (13.1) est montée de manière pivotante à une degré limité dans la première pièce annulaire (13.2) à des doigts (19) diamétralement opposés, faisant saillie radialement vers l'intérieur autour d'un deuxième axe de pivotement, qui sont formés à des bras (20) de la première pièce annulaire (13.2) faisant saillie dans la direction de l'orifice de l'élargissement (1 ") et s'engrenant dans des trous de support (22) dans l'enveloppe de la deuxième pièce annulaire (13.1), la première et la deuxième axe de pivotement se croisant entre elles.

4. Dispositif d'évacuation selon à revendication 3, **caractérisé en ce que** les bras (20) de la première pièce annulaire (13.2) s'élargissent à partir du doigt (19) à l'extrémité jusqu'au corps de la première pièce annulaire (13.2) et forment une arête de butée (21), et qu'à côté des trous de support (22) dans la paroi extérieure de la deuxième pièce annulaire (13.1), une cavité est formée, aux bords (C) de laquelle un bord de butée (21) de la première pièce annulaire (13.2) est en appui dans la position de pivotement maximum possible.
